## Europäisches Patentamt
## European Patent Office
## Office européen des brevets

(11) Veröffentlichungsnummer: **0 345 862 A2**

(12) **EUROPÄISCHE PATENTANMELDUNG**

(21) Anmeldenummer: **89201365.7**

(51) Int. Cl.⁴: **B01D 53/34**

(22) Anmeldetag: **27.05.89**

(30) Priorität: **07.06.88 DE 3819356**

(43) Veröffentlichungstag der Anmeldung:
**13.12.89 Patentblatt 89/50**

(84) Benannte Vertragsstaaten:
**BE DE FR GB NL SE**

(71) Anmelder: **METALLGESELLSCHAFT Aktiengesellschaft**
**Reuterweg 14**
**D-6000 Frankfurt am Main(DE)**

(72) Erfinder: **Winkler, Helmut, Dr.**
**Morgensternstrasse 11**
**D-6073 Egelsbach(DE)**
Erfinder: **Baums, Hans-Werner**
**Marienstrasse 39**
**D-6053 Obertshausen(DE)**
Erfinder: **Rittinger, Günter**
**Lessingstrasse 73**
**D-6367 Karben 6(DE)**

(54) **Verfahren zum Entfernen von Schwefelwasserstoff aus einem Gasgemisch mittels Aktivkohle.**

(57) Aus einem Rohgas wird Schwefelwasserstoff mittels mit Kaliumjodid imprägnierter Aktivkohle entfernt. Man leitet das Rohgas, das auch freien Sauerstoff in überstöchiometrischer Menge enthält, bei einem Druck im Bereich von 1 bis 200 bar und bei Temperaturen unterhalb 100° C durch eine Schüttung körniger Aktivkohle, wobei Elementarschwefel gebildet wird. Die Aktivkohle weist eine Oberfäche nach BET von 500 bis 1500 m²/g, einen Kaliumjodid-Gehalt von 0,5 bis 5 Gew.-% und Korngrößen von 0,5 bis 6 mm auf. Die Aktivkohle wird mit mindestens 50 Gew.-% absorbiertem Elementarschwefel, bezogen auf unbeladene Kohle, beladen. Die Regenerierung der Aktivkohle erfolgt bei einem Druck von 1 bis 1,5 bar mit heißem Inertgas mit Temperaturen von 200 bis 500° C, welches man durch die Aktivkohle leitet und den Elementarschwefel entfernt. Nach mindestens viermaliger Regenerierbehandlung wird die Aktivkohle erneut mit Kaliumjodid imprägniert.

EP 0 345 862 A2

EP 0 345 862 A2

## Verfahren zum Entfernen von Schwefelwasserstoff aus einem Gasgemisch mittels Aktivkohle

Die Erfindung betrifft ein Verfahren zum Entfernen von Schwefelwasserstoff ($H_2S$) aus einem Rohgas mittels mit Kaliumjodid imprägnierter Aktivkohle.

Im deutschen Patent 25 07 672 und im dazu korrespondierenden US-Patent 4 075 282 wird erwähnt, daß man eine mit Kaliumjodid imprägnierte Aktivkohle auch für die Entfernung von $H_2S$ aus einem Gasgemisch verwenden kann. Der Erfindung liegt die Aufgabe zugrunde, dieses Verfahren zu optimieren, wobei die Aktivkohle in der Beladephase möglichst lange und wirksam zur Verfügung stehen soll.

Beim Verfahren der Erfindung wird eine Aktivkohle verwendet, die eine Oberfläche nach BET von 500 bis 1500 $m^2/g$ und vorzugsweise 900 bis 1300 $m^2/g$ aufweist. Diese Aktivkohle ist mit Kaliumjodid imprägniert, wobei der Gehalt an KJ 0,5 bis 5 Gew.-% und vorzugsweise 1 bis 4 Gew.-% beträgt. Die körnige Aktivkohle weist Korngrößen im Bereich von 0,5 bis 6 mm auf. Durch eine Schüttung dieser körnigen, imprägnierten Aktivkohle wird das Rohgas, das $H_2S$ und freien Sauerstoff enthält, geleitet, wobei Elementarschwefel entsteht, der auf der Aktivkohle adsorbiert wird. Das Rohgas enthält pro $Nm^3$ bis zu 15000 mg $H_2S$ und freien Sauerstoff in überstöchiometrischer Menge, so daß für die Reaktion

$$2 H_2S + O_2 = 2 S + 2 H_2O$$

ein Überschuß an Sauerstoff zur Verfügung steht. In der Beladephase, wenn das Rohgas durch die Aktivkohleschüttung geleitet wird, liegt der Druck im Umsetzungsbereich bei 1 bis 200 bar und die Temperatur unter 100 °C. Während einer Beladephase wird die Aktivkohle mit mindestens 50 Gew.-% und vorzugsweise mindestens 60 Gew.-% adsorbiertem Elementarschwefel, bezogen auf unbeladene Kohle, beladen. Von $H_2S$ weitgehend befreites Reingas wird aus der Schüttung abgezogen.

Zum erfindungsgemäßen Verfahren gehört die Regenerierbehandlung, durch welche die Elementarschwefel enthaltende Aktivkohle von der Beladung wieder weitgehend befreit wird. Zu diesem Zweck leitet man bei einem Druck von 1 bis 1,5 bar heißes Inertgas mit Temperaturen von 200 bis 500 °C und vorzugsweise 300 bis 400 °C durch die Schüttung der beladenen Aktivkohle. Dadurch wird der Schwefel dampfförmig aus der Aktivkohle gewonnen. Nachdem man die regenerierte Aktivkohle mit Reingas gekühlt hat, kann man sie erneut zum Entfernen von $H_2S$ aus dem Rohgas verwenden.

Beim erfindungsgemäßen Verfahren kann die imprägnierte Aktivkohle mindestens viermal dem Zyklus Beladephase/Regenerierbehandlung unterzogen werden, bevor die Imprägnierung so weit abgetragen ist, daß die Aktivkohle erneut mit Kaliumjodid imprägniert werden muß. Dadurch wird die Verfügbarkeit der Aktivkohle erheblich gesteigert.

Für die Regenerierbehandlung hat sich als Inertgas Stickstoff als besonders zweckmäßig erwiesen, da es ein billiges, leicht zu handhabendes Gas ist. Das Inertgas wird üblicherweise in umgekehrter Richtung zum Rohgas durch die Schüttung geleitet, dabei leitet man das Inertgas bevorzugt von oben nach unten, wobei der verflüssigte Schwefel ungehindert nach unten abfließen kann. Die Schüttung der imprägnierten Aktivkohle kann ein Festbett oder ein sich langsam nach unten bewegendes Bett bilden.

Während der Regenerierbehandlung leitet man das heiße Inertgas mit Gasgeschwindigkeiten von 5 bis 50 cm/s und vorzugsweise 8 bis 30 cm/s durch die Schüttung. Wenn durch mehrmaliges Regenerieren die Kaliumjodid-Imprägnierung auf der Aktivkohle so stark verringert wurde, daß die gewünschte Umsetzung des $H_2S$ mit Sauerstoff zu Elementarschwefel nicht mehr mit genügender Intensität abläuft, wird die von der Schwefelbeladung befreite Aktivkohle nachimprägniert. Dies kann z.B. durch Tauchen oder Tränken der Aktivkohle mit einer KJ-Lösung geschehen; Einzelheiten sind in der DE-PS 25 07 627 beschrieben.

Zumeist ist es zweckmäßig, vor Beginn der Regenerierbehandlung die beladene Aktivkohle mit Luft durchzublasen, um koadsorbierte organische Substanzen abzutreiben. Die hierbei entstehende Abluft wird dem Rohgas beigemischt, das während der Regenerierbehandlung der ersten Schüttung durch eine zweite Aktivkohle-Schüttung geleitet wird.

Beispiel

Im Labormaßstab wird folgendermaßen gearbeitet:

Ein rohrförmiger Behälter mit einem Innendurchmesser von 3,5 cm enthält körnige, mit KJ imprägnierte Aktivkohle in einer Schütthöhe von 40 cm. Die Aktivkohle hat eine BET-Oberfläche von 1200 $m^2/g$, sie ist mit 2,4 Gew.-% KJ beladen und weist ein Kornspektrum von 2 bis 4 mm auf.

Um die Abscheidung von $H_2S$ an der Aktivkohle zu untersuchen, wird Stickstoff bereitgestellt, der 0,12 Vol.-% $H_2S$ und 0,2 Vol.-% $O_2$ enthält. Dieses Gasgemisch wird mit einer Geschwindigkeit von 40 cm/s aufwärts durch die Aktivkohle-Schüttung geleitet, wobei die Temperatur auf 50 °C gehalten wird. Die Beladephase eines jeden Zyklus beträgt 100 h. Danach wird die Schüttung der Regenerierbehandlung unterworfen, wobei man eine Temperatur von 350°C einstellt und pro Stunde 0,3 m³ Stickstoff als 'Inertgas durch die Schüttung leitet. Die Gasgeschwindigkeit, bezogen auf 350°C, beträgt 18,4 cm/s.

In der nachfolgenden Tabelle werden Ergebnisse dargestellt, die bei sechs Zyklen, jeweils bestehend aus Beladung und Regenerierung, gefunden wurden. S ist die Elementarschwefel-Beladung der Aktivkohle am Ende des jeweiligen Zyklus in Gew.-%, A gibt die Zeitdauer in Stunden an, während der das Regeneriergas (N₂) durch die Schüttung geleitet wird, B gibt die restliche Elementarschwefel-Beladung auf der Aktivkohle am Ende der Regenerierbehandlung an und KJ ist die verbleibende Kaliumjodid-Imprägnierung auf der Aktivkohle am Ende des Zyklus. Nach dem fünften Zyklus war die regenerierte Aktivkohle mit Kaliumjodid bis zu einer Beladung von 2,4 Gew.-% erneut imprägniert worden.

| Zyklus | S (Gew.-%) | A (h) | B (Gew.-%) | KJ (Gew.-%) |
|--------|-----------|-------|-----------|-------------|
| 1 | 52,5 | 5 | 7,5 | 1,77 |
| 2 | 49,3 | 7,3 | 6,8 | 1,43 |
| 3 | 42,9 | 17 | 0,7 | 1,08 |
| 4 | 46,3 | 5 | 8,2 | 0,88 |
| 5 | 43,8 | 3,3 | 26,0 | 0,6 |
| 6 | 49,8 | 5 | 2,1 | 1,4 |

**Ansprüche**

1. Verfahren zum Entfernen von Schwefelwasserstoff ($H_2S$) aus einem Rohgas mittels mit Kaliumjodid imprägnierter Aktivkohle, dadurch gekennzeichnet, daß man das Rohgas, das pro Nm³ bis zu 15000 mg $H_2S$ und freien Sauerstoff in überstöchiometrischer Menge enthält, zur Umwandlung des $H_2S$ in Elementarschwefel bei einem Druck im Bereich von 1 bis 200 bar und bei Temperaturen unterhalb 100°C durch eine Schüttung körniger Aktivkohle leitet, wobei die Aktivkohle
a) eine Oberfläche nach BET von 500 bis 1500 m²/g,
b) einen Gehalt an KJ von 0,5 bis 5 Gew.-% und
c) Korngrößen im Bereich von 0,5 bis 6 mm
aufweist, dabei die Aktivkohle mit mindestens 50 Gew.-% adsorbiertem Elementarschwefel, bezogen auf unbeladene Kohle, belädt, Reingas aus der Schüttung abzieht, daß man die beladene Aktivkohle einer Regenerierbehandlung unterzieht, wobei man bei einem Druck von 1 bis 1,5 bar heißes Inertgas mit Temperaturen von 200 bis 500°C durch die Aktivkohleschüttung leitet und den Elementarschwefel weitgehend entfernt, die regenerierte Aktivkohle mit Reingas kühlt und erneut Rohgas hindurchleitet, und daß man nach mindestens viermaliger Regenerierbehandlung die Aktivkohle erneut mit Kaliumjodid imprägniert.

2. Verfahren nach Anspruch 1, dadurch gekennzeichnet, daß man als Inertgas Stickstoff verwendet.

3. Verfahren nach Anspruch 1 oder 2, dadurch gekennzeichnet, daß das Rohgas in umgekehrter Richtung zum Inertgas durch die Schüttung geleitet wird.